# EUROPEAN PATENT SPECIFICATION

(11) **EP 3 218 953 B1**
(45) Date of publication and mention of the grant of the patent: **07.08.2019**
(21) Application number: 15858433.4
(22) Date of filing: 12.11.2015
(51) Int. Cl.: H01M 10/054, H01M 4/134, H01M 10/0569, H01M 4/38, H01M 4/1395

(54) **SECONDARY BATTERY WITH NON-AQUEOUS ELECTROLYTE**
SEKUNDÄRE BATTERIE MIT WASSERFREIEM ELEKTROLYT
BATTERIE SECONDAIRE À ÉLECTROLYTE NON AQUEUX

(30) Priority: 12.11.2014 US 201414539448; 28.01.2015 US 201514607429
(43) Date of publication of application: 20.09.2017
(73) Proprietor: Intec Energy Storage Corp., Toronto, Ontario M5C 1Y2 (CA)
(72) Inventor: IAROCHENKO, Alexandre M., Orilla, Ontario L3V 6H7 (CA)
(74) Representative: HGF Limited
(86) International application number: PCT/CA2015/000573
(87) International publication number: WO 2016/074069

(56) References cited:
- EP-A1- 2 631 982
- WO-A1-2016/074070
- US-A- 1 920 151
- US-A- 5 457 599
- US-A1- 2013 089 769
- US-A1- 2014 001 401
- US-A1- 2015 147 661
- US-B1- 6 409 905
- US-B2- 7 342 773
- US-B2- 7 397 651

## Description

### BACKGROUND OF THE INVENTION

### 1. Field of the Invention

This invention relates to electrical energy storage devices having an anode of Aluminum and an electrolyte containing ions of Aluminum.

This invention also relates to a method for constructing an electrical energy storage device having an anode of Aluminum and an electrolyte including ions containing Aluminum.

### 2. Description of the Prior Art

It is generally known to construct batteries with an anode comprising a layer of Aluminum. These Aluminum batteries typically take the form of primary, or non-rechargeable Aluminum-Air batteries, such as the type disclosed in US Patent No. 4,925,744. The use of Aluminum alloy with .1 to .5 % by weight of Indium to make a thin film battery electrode is disclosed in US Patent Application Pub. No. 2002/0,148,539. US Patent Application 2012/0,082,904 discloses a battery that includes an anode comprising aluminum metal and an electrolyte including ions containing Aluminum.

It is also well known to construct batteries as a sandwich of layers, with a cathode sandwiched with the membrane and disposed in spaced and parallel relationship with the anode and an electrolyte impregnating the membrane to carry an ion current through the membrane. One such example is shown in US Patent Application 2009/0142668.

It is known to use a dopant to alter the electrochemical properties of a battery cathode. Such a doped cathode is disclosed in US Patent No. 6,949,233.

EP 2631982 (A1) discloses a secondary battery wherein an electrolyte contains an alkyl sulfone and a solvent together with an Aluminum salt.

Existing energy storage devices with anodes of Aluminum have been constrained by corrosion and by the formation of oxides on the surface of the anode which blocks ions in the electrolyte from being able to react with the anode and inhibits such batteries from being discharged and recharged again.

### SUMMARY OF THE INVENTION

The invention provides for an electrical energy storage device with an Anode containing Aluminum and a cathode including a host lattice having a conjugated system with delocalized π electrons bonded with a dopant that contains Aluminum and an electrolyte with positive and negative ions of Aluminum dispersed in Glycerol. The invention also provides for a method of constructing such an electrical energy storage device including the step of making the electrolyte by dissolving Aluminum Perchlorate powder in Glycerol.

### ADVANTAGES OF THE INVENTION

The invention in its broadest aspect provides for an electrical energy storage device that includes an anode of Aluminum and a novel electrolyte including ions containing Aluminum dispersed in Glycerol.

Because of its unique electrochemical properties, Aluminum offers the potential for much greater energy density compared with other materials commonly used in electrical energy storage devices, such as in Lithium-Ion batteries. Aluminum offers further advantages in that it is abundant, inexpensive, and much less flammable than Lithium.

Glycerol, which is also called glycerine, glycerin, or propane-1,2,3-triol, is a simple polyol (sugar alcohol) having a molecular formula C₃H₈O₃. Glycerol is an abundant, stable, hygroscopic, and nontoxic solvent, ideal for use in a non-aqueous electrolyte. This electrolyte enables an Aluminum Secondary battery to be constructed with an anode of Aluminum which is capable of multiple charge and discharge cycles because it does not suffer from destructive corrosion or formation of oxides on the Aluminum in the anode.

### BRIEF DESCRIPTION OF THE DRAWINGS

Other advantages of the present invention will be readily appreciated, as the same becomes better understood by reference to the following detailed description when considered in connection with the accompanying drawings wherein:

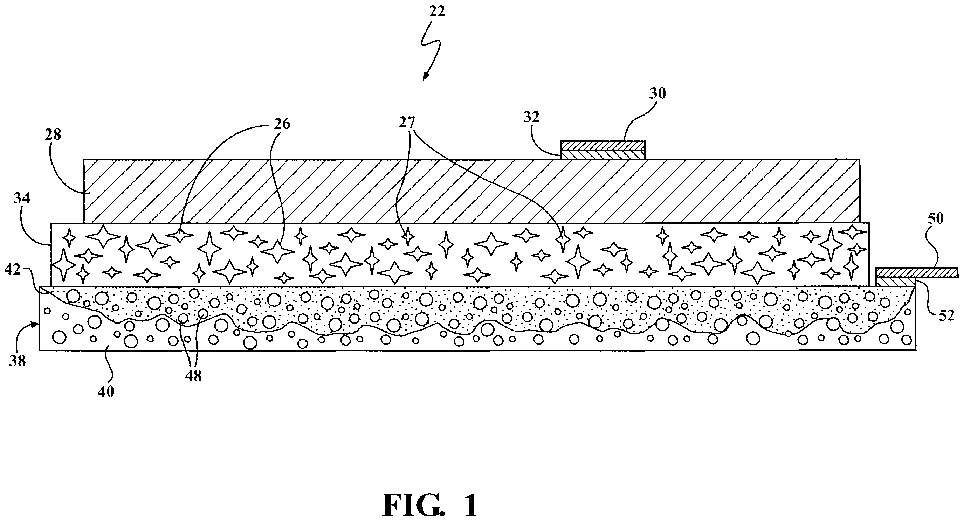

Figure 1 is a schematic cut-away view of an Aluminum secondary battery.

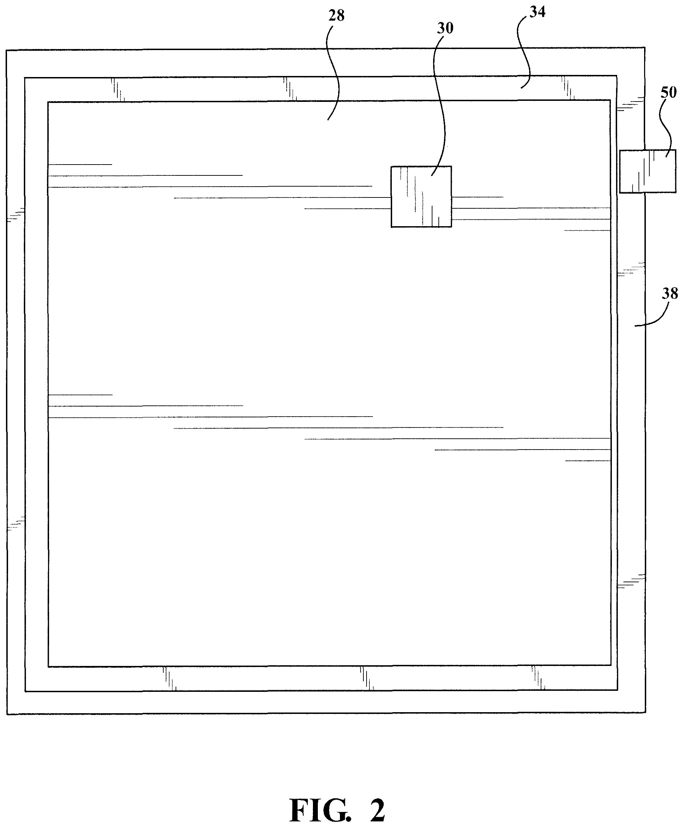

Figure 2 is a top view of a secondary battery with an anode disposed above a cathode layer.

### DESCRIPTION OF THE ENABLING EMBODIMENT

Referring to the Figures, wherein like numerals indicate corresponding parts throughout the several views, an electrical energy storage device **20** is disclosed as a secondary battery device **22** using a non-aqueous electrolyte **24** including ions **26, 27** containing Aluminum. The term "secondary battery" refers to an electrochemical energy storage device that is capable of being recharged. The term "non-aqueous" refers to a substance that contains no substantial quantity of water. Other types of electrical energy storage devices **20** may be constructed according to the present invention. Such electrical energy storage devices **20** include, for example, primary, or non-rechargeable batteries, and electrolytic capacitors.

As shown in the figures, the secondary battery device **22** is constructed as a stack of thin layers. It should be appreciated that the secondary battery device **22** could be made in numerous different physical arrangements. Examples of those arrangements are coin cells, cylindrical batteries, and multi-cell packages such as those that as are commonly used in laptop computers, personal electronics, and electric or hybrid-electric vehicles.

The secondary battery device **22** includes an anode **28** of Aluminum of 99.95 % purity and 0.1 to 0.6 wt% of Indium. The Anode **28** has a rectangular shape with a first length of 1.2 cm and a first width of 1.7 cm and a first thickness of 0.1 mm.

A negative lead **30** of an electrically conductive material is attached in electrical contact with the anode **28** using an electrically conductive cement **32** that includes particles of metal. Examples of such electrically conductive cement **32** are *Two Part Conductive Silver Paint* (Part No. 12642-14), sold by Electron Microscopy Sciences and *Solder*-*It Aluminum Solder Paste*, sold by SOLDER-IT, INC. of Pleasantville, New York. The negative lead **30** serves as a point of connection to conduct electrical current between the anode **28** and an external circuit for charging or discharging the battery device. The negative lead **30** could also serve as a point of connection to another battery cell as part of a multi-cell battery device. The negative lead **30** could be a wire, pad, terminal, or any other suitable means of making an electrical connection.

A membrane **34** of cellulose having a thickness of 0.08 mm and defining a plurality of pores **36** is sandwiched parallel to and contacting the anode **28**. The membrane **34** is an electrical insulator, but is permeable to dissolved ions **26, 27**.

The secondary battery device **22** also includes a cathode **38** having a rectangular shape with a second length of 1.4 cm and a second width of 1.9 cm and a second thickness of 0.1 mm. The cathode **38** is disposed adjacent and parallel to the membrane **34,** with the membrane **34** sandwiched between the cathode **38** and the anode **28**.

The cathode **38** includes a carrier sheet **40** of cellulose and an electroactive layer **42** disposed upon and integrated within the carrier sheet **40** on the side facing the anode **28**. In other words, the electroactive layer **42** coats the surface and extends into the structure of the carrier sheet **40**. The electroactive layer **42** contains a host lattice **44** that defines a plurality of voids and includes a conjugated system with delocalized π electrons. A conjugated system is defined as a system of connected p-orbitals containing delocalized electrons in chemical compounds. More specifically, the conjugation is the overlapping of one p-orbital with another across adjacent single (sigma) bonds. One such compound that has such a conjugated system is graphite. Other compounds such as, but not limited to, polyaniline and polyconjugated linear hydrocarbon polymers also include the conjugated systems with overlapping p-orbitals. A dopant **48** that includes Aluminum Alcoholate and Aluminum Glycerate is bonded to the conjugated system of the host lattice **44** to alter the electrochemical properties of the electroactive layer **42** of the cathode **38** to increase the rate of the reactions with the first ions **26** and the second ions **27** for charging and discharging the secondary battery device **22**. The dopant **48** is also intercalated in the host lattice **44** so that particles of the dopant **48** are embedded in the voids of the host lattice **44**.

A positive lead **50** containing graphite is electrically connected to the electroactive layer **42** of the cathode **38** for conducting electrical current between the cathode **38** and an external circuit for charging or discharging the battery. The positive lead **50** is electrically and mechanically attached to the electroactive layer **42** of the cathode **38** with a conductive adhesive **52** containing graphite. One such conductive adhesive **52** is *Graphite Conductive Adhesive **52** 112* (Part No. 12693-30), sold by Electron Microscopy Sciences. The positive lead **50** is preferably made of a thin film strip of thermally expanded graphite. The positive lead **50** may also be a rod of graphite with a diameter of 0.1 mm. The positive lead **50** could also serve as a point of connection to another battery cell as part of a multi-cell battery device. The positive lead **50** could be constructed as a wire, pad, terminal, or any other suitable means of making an electrical connection. Conductors of metal should not be placed in direct contact with the electroactive layer **42** of the cathode **38** because some metals have been shown to migrate into the electroactive layer **42** and interfere with the functionality of the cathode **38** in charging and discharging the secondary battery device **22**.

An electrolyte **24**, consisting essentially of glycerol and first ions **26** containing Aluminum and having a positive charge, including [Al(ClO₄)₂ • {C₃H₅(OH)₃}₂]⁺ and second ions **27** containing Aluminum and having a negative charge, including [Al(ClO₄)₄]⁻, impregnates or soaks the pores **36** of the membrane **34** for conveying the ions **26, 27** through the membrane **34**. The ions **26, 27** of Aluminum thereby comprise an ion current as they migrate between and react with the anode **28** and the cathode **38** to charge and discharge the battery.

In one embodiment, the host lattice **44** of the electroactive layer **42** comprises flakes **54** of graphite having particle size of 200 to 300 µm and a binder material that is wettable by glycerol. Alkyl glue and acrylic glue are each suitable binder materials, and either may be used.

In an alternative embodiment, the host lattice **44** of the electroactive layer **42** comprises particles of amorphous thermally expandable graphite and manganese dioxide and activated manganese dioxide and acetylene black and an electrically conductive paint including graphite and a binder material that is wettable by glycerol. Alkyl glue, acrylic glue, and conductive paint that includes graphite have each been found to be suitable binders.

In another alternative embodiment, the host lattice **44** of the electroactive layer **42** includes a polyconjugated linear hydrocarbon polymer.

In another alternative embodiment, the host lattice **44** of the electroactive layer **42** includes a cyclic polyconjugated chain polymer such as polyaniline.

The present invention also provides a method for constructing a secondary battery device **22**.

The method includes the steps of making a foil **56** by heating a plate of Aluminum of 99.95 % purity and 0.1 to 0.6 wt% of Indium to a temperature of 450°C, rolling the plate to reduce the thickness of the plate while cooling at a rate of more than 10°C per minute to a reduced thickness, reheating the reduced thickness of the plate and rerolling the reduced thickness of the plate into a foil **56** coated with Aluminum Oxide and surface contaminants and having a thickness between 0.05 and 0.1 mm.

The method proceeds with steps for processing and storing the foil **56**, which include: rinsing the foil **56** with ethanol to remove surface contaminants therefrom, submerging the foil **56** in a 4mol solution of water and Hydroxide for one minute to remove any Aluminum Oxide from the surface of the foil **56**, rinsing the foil **56** with water to remove all Hydroxide therefrom, subjecting the foil **56** to 70°C for 30 minutes to evaporate any moisture from it, and storing the foil **56** in an anhydrous environment to prevent oxidation.

The method continues with steps for making an anode **28** from the foil **56** by dividing the foil **56** into a rectangular shape to define the anode **28** having a first length of 1.2 cm and a first width of 1.7 cm, and attaching a negative lead **30** to the anode **28** with a cement **32** of silver paint or aluminum solder paste.

The method includes steps for constructing the battery device by wetting the membrane **34** with an electrolyte **24**, and stacking the membrane **34** upon and parallel to the anode **28**.

The method includes the steps of making a cathode **38** by applying the cathodic mixture **60** in a thin film layer to one side of a carrier sheet **40** of cellulose to soak into the carrier sheet **40**, subjecting the cathodic mixture **60** to a temperature of 50 to 60°C to solidify the cathodic mixture **60** into a host lattice **44** that is disposed upon and within the carrier sheet **40**, wetting the host lattice **44** with a doping fluid **62** containing a dopant **48** to allow the dopant **48** to bond with and intercalate into the host lattice **44** to produce an electroactive layer **42**, and attaching a positive lead **50** in electrical contact with the electroactive layer **42** of the cathode **38** with an adhesive **52** containing graphite.

The method includes further steps for constructing the battery device by stacking the cathode **38** upon and parallel to the membrane **34** with the membrane **34** disposed between the anode **28** and the cathode **38**.

The method includes steps for producing an electrolyte **24** by dissolving Aluminum Perchlorate powder in glycerol to saturation to produce the electrolyte **24**.

The method also includes steps for producing the doping fluid **62** by dissolving AlCl₃ powder in ethanol to saturation to produce a background solution **66**, combining 40 wt% of the background solution **66** with 60 wt% of glycerol to produce a binary solvent **68**, grating 1 cm³ of 99.4 to 99.9 wt% of Aluminum of 99.95 % purity and 0.1 to 0.6 wt% of Indium to make filings **70** with an equivalent surface area of 20 to 30 cm², immersing the filings **70** in 150 to 200 ml of the binary solvent **68** until the filings **70** have dissolved to produce the doping fluid **62**.

The present invention also provides a first method for making the cathodic mixture **60** by mixing 5 wt% of alkyl glue with 60 wt% of ethanol with 35 wt% of flakes **54** of graphite.

The present invention provides a second, alternative, method for making the cathodic mixture **60** by mixing amorphous thermally expandable graphite powder with 1-5 wt% MnO₂ with 1-5 wt% activated MnO₂ with 1-5 wt% acetylene black to make an intermediate mixture, and adding a binder of alkyl glue and ethanol or acrylic glue or graphite paint to the intermediate mixture to make the cathodic mixture **60** having a consistency of thick spreadable paste.

Obviously, many modifications and variations of the present invention are possible in light of the above teachings and may be practiced otherwise than as specifically described while within the scope of the appended claims. That which is prior art in the claims precedes the novelty set forth in the "characterized by" clause. The novelty is meant to be particularly and distinctly recited in the "characterized by" clause whereas the antecedent recitations merely set forth the old and well-known combination in which the invention resides. In addition, the reference numerals in the claims are merely for convenience and are not to be read in any way as limiting.

## Claims

1. A secondary battery device **(20)** comprising;
an anode **(28)** comprising a layer of Aluminum,
a membrane **(34)** sandwiched with said anode **(28)**,
an electrolyte **(24)** including first ions **(26)** containing Aluminum and having a positive charge and including second ions **(27)** containing Aluminum and having a negative charge and said electrolyte **(24)** impregnating said membrane **(34)** to carry an ion current through said membrane **(34)**,
a cathode **(38)** sandwiched with said membrane **(34)** and disposed in spaced and parallel relationship with said anode **(28)**,
and **characterized by**,
said electrolyte **(24)** consisting essentially of glycerol and said first ions **(26)** containing Aluminum and said second ions **(27)** containing Aluminum dispersed in said glycerol for migrating between and reacting with said anode **(28)** of Aluminum and said cathode **(38)** to charge and discharge said secondary battery device **(20)**.

2. A secondary battery device **(20)** as set forth in claim 1 wherein said first ions **(26)** containing Aluminum include [Al(ClO₄)₂ • {C₃H₅(OH)₃}₂]⁺ and said second ions **(27)** containing Aluminum include [Al(ClO₄)₄]⁻.

3. A secondary battery device **(20)** as set forth in claim 1, wherein said cathode **(38)** contains a host lattice **(44)** having a conjugated system with delocalized π electrons and a dopant **(48)** containing Aluminum Glycerate bonded with said host lattice **(44)** to alter the electrochemical properties of said host lattice **(44)** of said cathode **(38)**.

4. A secondary battery device **(20)** as set forth in claim 3 wherein said dopant **(48)** contains Aluminum Alcoholate.

5. A secondary battery device **(20)** as set forth in claim 1, further comprising;
said anode **(28)** consisting of a layer of 99.4 to 99.9 wt% of solid Aluminum of 99.95 % purity and 0.1 to 0.6 wt% of Indium and having a rectangular shape with a first length of 1.2 cm and a first width of 1.7 cm and a first thickness of 0.1 mm,
a negative lead **(30)** of an electrically conductive material in electrical contact with said anode **(28)** for conducting electrical current with external circuitry,
a cement **(32)** including particles of metal disposed between and bonding said anode **(28)** and said negative lead **(30)** for conducting electrical current therebetween,
said membrane **(34)** being of cellulose having a third thickness of 0.08 mm and defining a plurality of pores **(36)** and sandwiched with said anode **(28)** for providing electrical insulation therebetween,
said electrolyte **(24)** impregnating said pores **(36)** of said membrane **(34)** to carry said ion current through said membrane **(34)**,
said cathode **(38)** having a rectangular shape with a second length of 1.4 cm and a second width of 1.9 cm and a second thickness of 0.1 mm disposed adjacent and parallel to said membrane **(34)** with said membrane **(34)** being sandwiched between said cathode **(38)** and said anode **(28)**,
said cathode **(38)** including a carrier sheet **(40)** of cellulose and an electroactive layer **(42)** integrated with and upon said carrier sheet **(40)** facing said anode **(28)**,
a positive lead **(50)** containing graphite in electrical contact with said electroactive layer **(42)** of said cathode **(38)** for conducting electrical current with external circuitry,
an adhesive **(52)** containing graphite disposed between and bonding said electroactive layer **(42)** and said positive lead **(50)** for conducting electrical current therebetween,
said electrolyte **(24)** consisting essentially of glycerol and said first ions **(26)** including [Al(ClO₄)₂ • {C₃H₅(OH)₃}₂]⁺ and said second ions **(27)** including [Al(ClO₄)₄]⁻ for migrating between and reacting with said anode **(28)** and said cathode **(38)** to charge and discharge said secondary battery device **(20)**,
said electroactive layer **(42)** of said cathode **(38)** containing a host lattice **(44)** having a conjugated system with delocalized π electrons and defining voids and a dopant **(48)** containing Aluminum Alcoholate and Aluminum Glycerate bonded with said conjugated system of said host lattice **(44)** and intercalated in said voids to alter the electrochemical properties of said electroactive layer **(42)** of said cathode **(38)** to increase the rate of the reactions with said first ions **(26)** and said second ions **(27)** for charging and discharging said secondary battery device **(22)**.

6. A secondary battery device **(20)** as set forth in claim 5 wherein said host lattice **(44)** of said electroactive layer **(42)** comprises flakes **(54)** of graphite having particle size of 200 to 300 µm and a binder material wettable by glycerol.

7. A secondary battery device **(20)** as set forth in claim 6 wherein said binder material comprises alkyl glue.

8. A secondary battery device **(20)** as set forth in claim 6 wherein said binder material comprises acrylic glue.

9. A secondary battery device **(20)** as set forth in claim 5 wherein said host lattice **(44)** of said electroactive layer **(42)** comprises particles of amorphous thermally expandable graphite and manganese dioxide and activated manganese dioxide and acetylene black and a binder material being wettable by glycerol and an electrically conductive paint including graphite.

10. A secondary battery device **(20)** as set forth in claim 9 wherein said binder material is an electrically conductive paint including graphite.

11. A secondary battery device **(20)** as set forth in claim 5 wherein said host lattice **(44)** of said electroactive layer **(42)** includes a polyconjugated linear hydrocarbon polymer.

12. A secondary battery device **(20)** as set forth in claim 5 wherein said host lattice **(44)** of said electroactive layer **(42)** includes a cyclic polyconjugated chain polymer of polyaniline.

13. A method for constructing a secondary battery device **(20)** having an anode **(28)** and a membrane **(34)** and an electrolyte **(24)** and a cathode **(38)**, said method comprising;
wetting the membrane **(34)** with an electrolyte **(24)**,
stacking the membrane **(34)** upon and parallel to the anode **(28)**,
stacking the cathode **(38)** upon and parallel to the membrane **(34)** with the membrane **(34)** disposed between the anode **(28)** and the cathode **(38)**,
and **characterized by**,
dissolving Aluminum Perchlorate powder in glycerol to saturation to make the electrolyte **(24)**.

14. The method as set forth in claim 13 further comprising steps for making a doping fluid **(62)** for carrying a dopant **(48)** containing Aluminum into an electrode **(28, 38)** of a secondary battery device **(20)** using filings **(70)** containing Aluminum, said method comprising;
dissolving AlCl₃ powder in ethanol to create a background solution **(66)**,
combining the background solution **(66)** with glycerol to produce a binary solvent **(68)**, and
immersing the filings **(70)** containing Aluminum in the binary solvent **(68)** until the filings **(70)** containing Aluminum have dissolved to produce the doping fluid **(62)**.

## Patentansprüche

1. Sekundäre Batterievorrichtung (20), umfassend: eine Anode (28), umfassend eine Schicht aus Aluminium, eine mit der Anode (28) sandwichförmig angeordnete Membran (34), ein Elektrolyt (24), enthaltend erste Ionen (26), die Aluminium enthalten und eine positive Ladung aufweisen, und enthaltend zweite Ionen (27), die Aluminium enthalten und eine negative Ladung aufweisen, und wobei das Elektrolyt (24) die Membran (34) imprägniert, um einen Ionenstrom durch die Membran (34) zu tragen, eine mit der Membran (34) sandwichförmig angeordnete Kathode (38) und die in beabstandeter und paralleler Beziehung zur Anode (28) angeordnet ist, und **dadurch gekennzeichnet, dass** das Elektrolyt (24) im Wesentlichen aus Glycerin besteht und die ersten Ionen (26) Aluminium enthalten und die zweiten Ionen (27) im Glycerin dispergiertes Aluminium enthalten, um zwischen der Anode (28) aus Aluminium und der Kathode (38) zu migrieren und zu reagieren, um die sekundäre Batterievorrichtung (20) zu laden und zu entladen.

2. Sekundäre Batterievorrichtung (20) nach Anspruch 1, wobei die ersten aluminiumhaltigen Ionen (26) [Al(ClO₄)₂ • {C₃H₅(OH)₃}₂]⁺ enthalten und die zweiten aluminiumhaltigen Ionen (27) [Al(ClO₄)₄]⁻ enthalten.

3. Sekundäre Batterievorrichtung (20) nach Anspruch 1, wobei die Kathode (38) ein Hostgitter (44) mit einem konjugierten System mit delokalisierten π-Elektronen und einem aluminiumglycerinhaltigen Dotiermittel (48), das mit dem Hostgitter (44) verbunden ist, enthält, um die elektrochemischen Eigenschaften des Hostgitters (44) der Kathode (38) zu ändern.

4. Sekundäre Batterievorrichtung (20) nach Anspruch 3, wobei das Dotiermittel (48) Aluminiumalkoholat enthält.

5. Sekundäre Batterievorrichtung (20) nach Anspruch 1, ferner umfassend: die Anode (28), bestehend aus einer Schicht aus 99,4 bis 99,9 Gew.-% aus Vollaluminium mit einer Reinheit von 99,95 % und 0,1 bis 0,6 Gew.-% Indium mit einer rechtwinkligen Form mit einer ersten Länge von 1,2 cm und einer ersten Breite von 1,7 cm und einer ersten Dicke von 0,1 mm, eine negative Leitung (30) aus einem elektrisch leitfähigen Material in elektrischem Kontakt mit der Anode (28) zum Leiten von elektrischem Strom mit externen Schaltkreisen, einen metallpartikelhaltigen Zement (32), der zwischen der Anode (28) und der negativen Leitung (30) angeordnet ist und diese verbindet, um elektrischen Strom dazwischen zu leiten, die Membran (34), die aus Zellulose besteht und eine dritte Dicke von 0,08 mm aufweist und eine Vielzahl von Poren (36) definiert und sandwichförmig mit der Anode (28) angeordnet ist, um elektrische Isolation dazwischen bereitzustellen, das Elektrolyt (24), das die Poren (36) der Membran (34) imprägniert, um den Ionenstrom durch die Membran (34) zu tragen, die Kathode (38), die eine rechtwinklige Form mit einer zweiten Länge von 1,4 cm und einer zweiten Breite von 1,9 cm und einer zweiten Dicke von 0,1 mm aufweist, die angrenzend an und parallel zur Membran (34) angeordnet ist, wobei die Membran (34) sandwichförmig zwischen der Kathode (38) und der Anode (28) angeordnet ist, die Kathode (38), die einen Trägerbogen (40) aus Zellulose und eine elektroaktive Schicht (42) enthält, die mit und auf dem Trägerbogen (40) zur Anode (28) gewandt angeordnet ist, eine positive graphithaltige Leitung (50) in elektrischem Kontakt mit der elektroaktiven Schicht (42) der Kathode (38) zum Leiten von elektrischem Strom mit externen Schaltkreisen, ein graphithaltiges Haftmittel (52), das zwischen der elektroaktiven Schicht (42) und der positiven Leitung (50) angeordnet ist und diese verbindet, um elektrischen Strom dazwischen zu leiten, das Elektrolyt (24), das im Wesentlichen aus Glycerin und den ersten Ionen (26), enthaltend [Al(ClO₄)₂ • {C₃H₅(OH)₃}₂]⁺, und den zweiten Ionen (27), enthaltend [Al(ClO₄)₄]⁻, besteht zum Migrieren zwischen und Reagieren mit der Anode (28) und der Kathode (38), um die sekundäre Batterievorrichtung (20) zu laden und zu entladen, die elektroaktive Schicht (42) der Kathode (38), die ein Hostgitter (44) mit einem konjugierten System mit delokalisierten π-Elektronen aufweist und die Leerräume definiert, und ein Dotiermittel (48), enthaltend Aluminiumalkoholat und Aluminiumglycerat, enthält, die mit dem konjugierten System des Hostgitters (44) verbunden und in die Leerräume eingeschoben ist, um die elektrochemischen Eigenschaften der elektroaktiven Schicht (42) der Kathode (38) zu ändern, um die Rate der Reaktionen mit den ersten Ionen (26) und den zweiten Ionen (27) zu erhöhen, um die sekundäre Batterievorrichtung (22) zu laden und zu entladen.

6. Sekundäre Batterievorrichtung (20) nach Anspruch 5, wobei das Hostgitter (44) der elektroaktiven Schicht (42) Flocken (54) aus Graphit mit einer Partikelgröße von 200 bis 300 µm und ein durch Glycerin benetzbares Bindematerial umfasst.

7. Sekundäre Batterievorrichtung (20) nach Anspruch 6, wobei das Bindematerial Alkylklber enthält.

8. Sekundäre Batterievorrichtung (20) nach Anspruch 6, wobei das Bindematerial Acrylkleber enthält.

9. Sekundäre Batterievorrichtung (20) nach Anspruch 5, wobei das Hostgitter (44) der elektroaktiven Schicht (42) Partikel aus amorphem, thermisch expandierbarem Graphit und Mangandioxid und aktiviertem Mangandioxid und Acetylenruß und ein Bindematerial, das durch Glycerin benetzbar ist, und einen elektrisch leitfähigen graphithaltigen Lack umfasst.

10. Sekundäre Batterievorrichtung (20) nach Anspruch 9, wobei das Bindematerial ein elektrisch leitfähiger graphithaltiger Lack ist.

11. Sekundäre Batterievorrichtung (20) nach Anspruch 5, wobei das Hostgitter (44) der elektroaktiven Schicht (42) ein polykonjugiertes lineares Kohlenwasserstoffpolymer enthält.

12. Sekundäre Batterievorrichtung (20) nach Anspruch 5, wobei das Hostgitter (44) der elektroaktiven Schicht (42) ein zyklisches polykonjugiertes Kettenpolymer von Polyanilin enthält.

13. Verfahren zum Konstruieren einer sekundären Batterievorrichtung (20) mit einer Anode (28) und einer Membran (34) und einem Elektrolyt (24) und einer Kathode (38), wobei das Verfahren umfasst:
Benetzen der Membran (34) mit einem Elektrolyt (24), Stapeln der Membran (34) auf und parallel zur Anode (28), Stapeln der Kathode (38) auf und parallel zur Membran (34), wobei die Membran (34) zwischen der Anode (28) und der Kathode (38) angeordnet ist, und **gekennzeichnet durch** Auflösen von Aluminiumperchloratpulver in Glycerin bis zur Sättigung, um das Elektrolyt (24) herzustellen.

14. Verfahren nach Anspruch 13, ferner umfassend Schritte zum Herstellen eines Dotierfluids (62) zum Tragen eines aluminiumhaltigen Dotiermittels (48) in eine Elektrode (28, 38) einer sekundären Batterievorrichtung (20) mithilfe von aluminiumhaltigen Spänen (70), wobei das Verfahren umfasst:
Auflösen von AlCl₃-Pulver in Ethanol, um eine Hintergrundlösung (66) zu schaffen, Kombinieren der Hintergrundlösung (66) mit Glycerin, um ein Binärlösemittel (68) zu erzeugen, und Eintauchen der aluminiumhaltigen Späne (70) in das Binärlösemittel (68), bis die aluminiumhaltigen Späne (70) sich aufgelöst haben, um das Dotierfluid (62) zu erzeugen.

## Revendications

1. Dispositif de batterie secondaire (20) comprenant ;
une anode (28) comprenant une couche d'aluminium,
une membrane (34) prise en sandwich avec ladite anode (28),
un électrolyte (24) contenant des premiers ions (26) contenant de l'aluminium et ayant une charge positive et contenant des seconds ions (27) contenant de l'aluminium et ayant une charge négative et ledit électrolyte (24) imprégnant ladite membrane (34) pour transporter un courant ionique à travers ladite membrane (34),
une cathode (38) prise en sandwich avec ladite membrane (34) et disposée de manière espacée et parallèle par rapport à ladite anode (28),
et **caractérisé en ce que**,
ledit électrolyte (24) est constitué essentiellement de glycérol et lesdits premiers ions (26) contenant de l'aluminium et lesdits seconds ions (27) contenant de l'aluminium sont dispersés dans ledit glycérol pour migrer entre ladite anode (28) d'aluminium et ladite cathode (38), et pour réagir avec celles-ci, afin de charger et de décharger ledit dispositif de batterie secondaire (20).

2. Dispositif de batterie secondaire (20) selon la revendication 1 dans lequel lesdits premiers ions (26) contenant de l'aluminium contiennent du [Al(ClO₄)₂ • {C₃H₅(OH)₃}₂]⁺ et lesdits seconds ions (27) contenant de l'aluminium contiennent du [Al(ClO₄)₄]⁻.

3. Dispositif de batterie secondaire (20) selon la revendication 1, dans lequel ladite cathode (38) contient un réseau hôte (44) ayant un système conjugué avec des électrons π délocalisés et un dopant (48) contenant du glycérat d'aluminium lié audit réseau hôte (44) pour modifier les propriétés électrochimiques dudit réseau hôte (44) de ladite cathode (38).

4. Dispositif de batterie secondaire (20) selon la revendication 3 dans lequel ledit dopant (48) contient de l'alcoolate d'aluminium.

5. Dispositif de batterie secondaire (20) selon la revendication 1, comprenant en outre ;
ladite anode (28) constituée d'une couche de 99,4 à 99,9 % en poids d'aluminium solide d'une pureté de 99,95 % et de 0,1 à 0,6 % en poids d'indium et ayant une forme rectangulaire avec une première longueur de 1,2 cm et une première largeur de 1,7 cm et une première épaisseur de 0,1 mm,
un fil négatif (30) d'un matériau électriquement conducteur en contact électrique avec ladite anode (28) pour acheminer le courant électrique à l'aide de circuits externes,
un ciment (32) contenant des particules de métal disposées entre ladite anode (28) et ledit fil négatif (30), et liant ceux-ci, pour acheminer le courant électrique entre ceux-ci,
ladite membrane (34) étant constituée de cellulose ayant une troisième épaisseur de 0,08 mm et définissant une pluralité de pores (36) et étant prise en sandwich avec ladite anode (28) pour permettre une isolation électrique entre celles-ci,
ledit électrolyte (24) imprégnant lesdits pores (36) de ladite membrane (34) pour transporter ledit courant ionique à travers ladite membrane (34),
ladite cathode (38), ayant une forme rectangulaire avec une seconde longueur de 1,4 cm, une seconde largeur de 1,9 cm et une deuxième épaisseur de 0,1 mm, étant disposée de manière adjacente et parallèle à ladite membrane (34), ladite membrane (34) étant prise en sandwich entre ladite cathode (38) et ladite anode (28),
ladite cathode (38), contenant une feuille de support (40) de cellulose et une couche électroactive (42) intégrée à ladite feuille de support (40) et sur celle-ci, faisant face à ladite anode (28),
un fil positif (50) contenant du graphite en contact électrique avec ladite couche électroactive (42) de ladite cathode (38) pour acheminer le courant électrique à l'aide de circuits externes,
une matière adhésive (52) contenant du graphite disposée entre ladite couche électroactive (42) et ledit fil positif (50), et liant ceux-ci, pour acheminer le courant électrique entre ceux-ci,
ledit électrolyte (24) étant constitué essentiellement de glycérol et lesdits premiers ions (26) contenant du [Al(ClO₄)₂ • {C₃H₅(OH)₃}₂]⁺ et lesdits seconds ions (27) contenant du [Al(ClO₄)₄]⁻ pour migrer entre ladite anode (28) et ladite cathode (38), et pour réagir avec celles-ci, afin de charger et de décharger ledit dispositif de batterie secondaire (20),
ladite couche électroactive (42) de ladite cathode (38) contenant un réseau hôte (44) ayant un système conjugué avec des électrons π délocalisés et définissant des vides et un dopant (48) contenant de l'alcoolate d'aluminium et du glycérat d'aluminium lié audit système conjugué dudit réseau hôte (44) et intercalé dans lesdits vides pour modifier les propriétés électrochimiques de ladite couche électroactive (42) de ladite cathode (38) afin d'augmenter la vitesse des réactions avec lesdits premiers ions (26) et lesdits seconds ions (27) pour charger et décharger ledit dispositif de batterie secondaire (22).

6. Dispositif de batterie secondaire (20) selon la revendication 5 dans lequel ledit réseau hôte (44) de ladite couche électroactive (42) comprend des flocons (54) de graphite ayant une granulométrie de 200 à 300 µm et un matériau liant pouvant être humidifié avec du glycérol.

7. Dispositif de batterie secondaire (20) selon la revendication 6 dans lequel ledit matériau liant comprend de la colle à base d'alkyle.

8. Dispositif de batterie secondaire (20) selon la revendication 6 dans lequel ledit matériau liant comprend de la colle acrylique.

9. Dispositif de batterie secondaire (20) selon la revendication 5 dans lequel ledit réseau hôte (44) de ladite couche électroactive (42) comprend des particules de graphite thermiquement expansible amorphe, de dioxyde de manganèse, de dioxyde de manganèse activé, de noir d'acétylène et un matériau liant pouvant être humidifié avec du glycérol et une peinture électriquement conductrice contenant du graphite.

10. Dispositif de batterie secondaire (20) selon la revendication 9 dans lequel ledit matériau liant est une peinture électriquement conductrice contenant du graphite.

11. Dispositif de batterie secondaire (20) selon la revendication 5 dans lequel ledit réseau hôte (44) de ladite couche électroactive (42) contient un polymère hydrocarboné linéaire polyconjugué.

12. Dispositif de batterie secondaire (20) selon la revendication 5 dans lequel ledit réseau hôte (44) de ladite couche électroactive (42) contient un polymère à chaîne cyclique polyconjugué de polyaniline.

13. Procédé de construction d'un dispositif de batterie secondaire (20) ayant une anode (28), une membrane (34), un électrolyte (24) et une cathode (38), ledit procédé comprenant ;
l'humidification de la membrane (34) avec un électrolyte (24),
l'empilement de la membrane (34) sur l'anode (28) et parallèlement à celle-ci,
l'empilement de la cathode (38) sur la membrane (34) et parallèlement à celle-ci, la membrane (34) étant disposée entre l'anode (28) et la cathode (38),
et **caractérisé par**,
la dissolution de poudre de perchlorate d'aluminium dans du glycérol jusqu'à saturation pour obtenir l'électrolyte (24).

14. Procédé selon la revendication 13 comprenant en outre les étapes de réalisation d'un liquide dopant (62) destiné à transporter un dopant (48) contenant de l'aluminium dans une électrode (28, 38) d'un dispositif de batterie secondaire (20) en utilisant des limailles (70) contenant de l'aluminium, ledit procédé comprenant ;
la dissolution de poudre d'AlCl₃ dans de l'éthanol pour créer une solution de fond (66),
la combinaison de la solution de fond (66) avec du glycérol pour produire un solvant binaire (68), et
l'immersion des limailles (70) contenant de l'aluminium dans le solvant binaire (68) jusqu'à ce que les limailles (70) contenant de l'aluminium soient dissous pour produire le liquide dopant (62).
